(19) Europäisches Patentamt
European Patent Office
Office européen des brevets

(11) **EP 2 139 949 B1**

(12) **FASCICULE DE BREVET EUROPEEN**

(45) Date de publication et mention
de la délivrance du brevet:
**04.04.2018 Bulletin 2018/14**

(21) Numéro de dépôt: **08736550.8**

(22) Date de dépôt: **24.04.2008**

(51) Int Cl.:
*C08L 77/00* ^(2006.01)   *C08L 23/00* ^(2006.01)
*C08L 61/06* ^(2006.01)   *C08L 23/04* ^(2006.01)
*C08L 23/20* ^(2006.01)   *C08L 23/10* ^(2006.01)
*C08L 23/22* ^(2006.01)   *C08L 51/00* ^(2006.01)

(86) Numéro de dépôt international:
**PCT/EP2008/055018**

(87) Numéro de publication internationale:
**WO 2008/135401 (13.11.2008 Gazette 2008/46)**

(54) **MATERIAU POLYAMIDE A PROPRIETES BARRIERES AUX FLUIDES ELEVEES**

POLYAMIDMATERIAL MIT HOHEN FLÜSSIGKEITSBARRIEREEIGENSCHAFTEN

POLYAMIDE MATERIAL HAVING HIGH FLUID BARRIER PROPERTIES

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **27.04.2007 FR 0703069**

(43) Date de publication de la demande:
**06.01.2010 Bulletin 2010/01**

(73) Titulaire: **Rhodia Opérations
93306 Aubervilliers (FR)**

(72) Inventeur: **PEDUTO, Nicolangelo
I-20131 Milano (IT)**

(74) Mandataire: **Schuck, Alexander et al
Isenbruck Bösl Hörschler LLP
Patentanwälte
EASTSITE ONE
Seckenheimer Landstraße 4
68163 Mannheim (DE)**

(56) Documents cités:
**WO-A1-2005/097902      JP-A- 63 061 050
JP-A- H07 150 034       US-A- 5 416 143
US-A- 5 443 867         US-A1- 2005 069 662**

## Description

La présente invention concerne des matériaux polyamides à propriétés barrières aux fluides, gaz et liquides, élevées. Ces matériaux peuvent notamment être utilisés pour la fabrication d'articles destinés à contenir ou à transporter un fluide tel que notamment des tubes, conduites ou réservoirs.

## ART ANTERIEUR

Il est connu de l'art antérieur d'utiliser des matériaux thermoplastiques pour la fabrication d'articles mono- ou multicouches destinés à contenir ou à transporter un fluide tel que par exemple des tubes, conduites ou réservoirs.

Toutefois, il est souvent nécessaire de procéder à des améliorations de ces matériaux pour leur conférer des propriétés barrières aux gaz ou aux liquides satisfaisantes.

Il est par exemple connu d'utiliser des tubes ou réservoirs multicouches, notamment tricouches ; chaque couche pouvant être constituée de matériaux différents pour conférer à l'ensemble les propriétés barrières et mécaniques requises selon les applications. On peut notamment citer les articles multicouches polyéthylène/copolymère éthylène-alcool vinylique/polyéthylène, entre chaque couche une couche de compatibilisation étant utilisée. Toutefois, de tels articles, notamment des tubes, sont coûteux à produire, et la transformation de l'EVOH entraîne une nécessité de nettoyage de l'extrudeuse, ce qui tend à diminuer la productivité de la fabrication de ces articles. Par ailleurs, des problèmes de délaminations peuvent survenir entre les matériaux incompatibles des différentes couches.

Il est aussi connu d'utiliser pour la diminution de la perméabilité des matrices plastiques, notamment des matrices polyamides, des nanocharges lamellaires. Une telle diminution de perméabilité est attribuée à un effet de « tortuosité » provoquée par ces nanocharges. Les nanocharges lamellaires les plus explorées aujourd'hui sont des argiles de type smectites, principalement la montmorillonite. Toutefois, il est difficile de mettre en oeuvre ces produits dans la mesure où il est nécessaire de les exfolier dans la matrice notamment en utilisant des agents d'intercalations pour obtenir des lamelles individuelles de haut facteur de forme.

Ainsi, jusqu'à maintenant, il a été proposé dans l'art antérieur des solutions complexes, difficiles à mettre en oeuvre et coûteuses pour augmenter les propriétés barrières des matériaux plastiques ; qui plus est souvent au regard des autres propriétés des matériaux plastiques tel que notamment les propriétés mécaniques.

Il est ainsi souhaitable de mettre au point des matériaux polyamides qui permettent d'obtenir des niveaux d'imperméabilité efficaces, tout en évitant les inconvénients mentionnés précédemment.

US5443867 décrit un article stratifié comprenant une composition à base de polyéthylène de haute densité, contenant en outre un polyamide, une résine novolaque et un polyéthylène greffé avec de l'acide fumarique comme agent compatibilisant.

US2005/0069662 A1 divulgue un article moulé contenant un polyamide, une résine novolaque et un copolymère éthylène/$\alpha$-oléfine comme modifiant choc.

## INVENTION

La demanderesse a mis en évidence de manière tout à fait surprenante que l'utilisation dans une matrice polyamide d'une résine novolaque et d'une polyoléfine permettait d'obtenir un matériau apte à la fabrication d'articles mono- ou multicouches présentant un excellent niveau d'imperméabilités aux gaz et aux liquides, de manière simple et sans altérer négativement les autres propriétés desdits matériaux. La solution de l'invention permet non seulement d'éviter les inconvénients connus de l'art antérieur, mais également d'obtenir des propriétés barrières aux fluides inconnues jusqu'à ce jour, en tout cas bien supérieures aux systèmes utilisés commercialement.

Les matériaux polyamides de l'invention présentent également de bonnes propriétés mécaniques, tel que par exemple un bon compromis module/choc, et/ou une tenue thermique permettant sa manipulation et son utilisation à de hautes températures.

Les compositions de l'invention permettent en outre de fabriquer, en association avec des matériaux polyoléfines, des structures multicouches, tel que par exemple des tuyaux extrudés, des articles réalisés par le procédé d'extrusion-soufflage, des articles injectés et soudés, ayant une excellente capacité d'adhésion avec le matériaux polyoléfines, et d'éviter tout problème de délamination. Une telle composition permet de plus de se passer de l'utilisation d'une couche de compatibilisation entre ladite composition de l'invention et un matériau polyoléfine.

L'invention concerne ainsi une composition polyamide à propriétés barrières élevées aux fluides comprenant au moins :

a) une matrice polyamide,
b) une résine novolaque,
c) de 5 à 30 % en poids d'une polyoléfine ne comprenant pas de groupements fonctionnels destinés à améliorer sa compatibilité avec le polyamide, ladite polyoléfine c) étant un polyéthylène de haute densité; et

d) un agent comptabilisant entre la polyoléfine et le polyamide, ledit agent de compatibilisation d) étant un polyéthylène greffé anhydride maléique; et caractérisé en outre en ce qu'elle comprend de 40 à 80 % en poids de polyamide, par rapport au poids total de la composition et de 2 à 20 % en poids de l'agent compatibilisant d), par rapport au poids total de la composition.

On entend par matériaux à propriétés barrières élevées aux fluides, un matériau qui présente une perméabilité réduite vis-à-vis d'un fluide. Selon la présente invention, le fluide peut être un gaz ou un liquide. Comme gaz, on peut citer notamment l'oxygène, le dioxyde de carbone, les hydrocarbures légers, tels que l'éthane, le propane, l'éthylène et le propylène, et la vapeur d'eau. Comme liquides, on peut citer les solvants apolaires, notamment les solvants représentatifs des essences tels que le toluène, l'isooctane et/ou les solvants polaires tels que l'eau et les alcools, les réfrigérants. Il est à noter que les liquides peuvent présenter des viscosités variables, tel que notamment les liquides de hautes viscosité s'apparentant aux gels ou crèmes.

Comme polyamide a) selon l'invention, on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Selon un mode de réalisation préférentiel de l'invention, la matrice thermoplastique est un polyamide choisi dans le groupe comprenant le polyamide 6, le polyamide 66, le polyamide 11, le polyamide 12, le polymétaxylylènediamine (MXD6), les mélanges et copolymères à base de ces polyamides.

Le polyamide est préférentiellement choisi dans le groupe comprenant les polyamides obtenus par polycondensation d'un diacide carboxylique linéaire avec une diamine linéaire ou cyclique comme le PA 6.6, PA 6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection, bien que l'on puisse utiliser aussi des polyamides de plus faibles viscosités.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 40 à 80 % en poids de polyamide, par rapport au poids total de la composition.

Les résines novolaques sont généralement des composés polyhydroxy, par exemple des produits de condensation de composés phénoliques avec des aldéhydes. Ces réactions de condensation sont généralement catalysées par un acide.

Les composés phénoliques peuvent être choisis seuls ou en mélange parmi le phénol, le crésol, le xylénol, le naphtol, les alkylphénols, comme le butyl-phénol, le terbutyl-phénol ou l'isooctyl-phénol ; ou tout autre phénol substitué. L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, et le glycoxal.

Les résines utilisées ont avantageusement un poids moléculaire supérieur compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La composition selon l'invention peut comprendre entre 0,1 à 20 % en poids de résine novolaque, notamment de 1 à 15 % en poids, particulièrement 2, 5 ou 10 % en poids, ou les proportions comprises entre ces valeurs, par rapport au poids total de la composition.

Comme explicité précédemment, la composition de l'invention comprend une polyoléfine ne comprenant pas de groupements fonctionnels destinés à améliorer sa compatibilité avec le polyamide.

Pour information, ces groupements sont généralement des groupements anhydride maléique, acide carboxylique salifié ou non, ester, acrylique, méthacrylique, ou époxy ; qui sont par exemple intégrés à la polyoléfine par l'utilisation d'un comonomère, tel que de l'anhydride maléique.

Les polyoléfines de l'invention présentent avantageusement un degré de cristallinité compris entre 40 et 80 %. Le degré de cristallinité est lié à la densité par la relation suivante :

$$C = dc (d - da) / d(dc - da)$$

dans laquelle : C = cristallinité, d = densité mesurée, da = densité de la phase amorphe, de = densité de la phase cristalline à la température donnée.

La cristallinité peut notamment être mesurée par DSC.

Comme polyoléfine de la présente invention, on utilise le polyéthylène de haute densité ayant notamment les caractéristiques suivantes :

- Densité comprise entre 0,94 et 0,97 g/cm$^3$
- Poids moléculaire compris entre 450.000 à 4.000.000 g/mol
- Indice de fluidité en fondu (MFI) mesuré selon la norme ISO 1133 (190°C, 2,16 Kg) compris entre 0,1 et 25 g/10mm
- Degré de cristallisation compris entre 60 et 80 %

Ces polyéthylènes de haute densité sont commercialisés sous les marques Lupolen 4261 AG de BASELL, Eraclene BB 76 de POLIMERI EUROPA.

La composition comprend de 5 à 30 % en poids de polyoléfine, par rapport au poids total de la composition. Comme agent compatibilisant d) entre la polyoléfine et le polyamide, on utilise des polyéthylène greffés anhydride maléique. La composition comprend de 2 à 20 % en poids d'agent compatibilisant d), par rapport au poids total de la composition, préférentiellement de 5 à 15 % en poids. On utilise tout préférentiellement au moins 30 %, préférentiellement au moins 50 % en poids d'agent compatibilisant, par rapport au poids de la polyoléfine c).

Le matériau ou composition de l'invention peut également comprendre d'autres composés ou additifs généralement utilisés dans des compositions à base de matrice plastique, tel que par exemple : charges de renfort ou de remplissage, des stabilisants thermiques, des nucléants, des plastifiants, des ignifugeants, des antioxydants, des anti-UV, des colorants, des azurants optiques, des lubrifiants, des agents anti-collage (anti-blocking), des agents matifiants tel que l'oxyde de titane, des agents de mise en oeuvre, des élastomères, des agents d'adhésion, des agents dispersants, des pigments, des agents modifiants la résistance aux chocs, des capteurs ou absorbeurs d'oxygène actifs, et/ou des catalyseurs.

La composition de l'invention peut notamment comprendre des charges de renfort ou de remplissage choisi dans le groupe comprenant les charges fibreuses telles que les fibres de verre, les fibres d'aramides et les fibres de carbone ; ou des charges minérales, telles que les argiles alumino-silicates, les kaolin, les wollastonites, les talcs, les carbonates de calcium, les fluoro-micas, les phosphates de calcium et dérivés. La concentration pondérale des charges de renfort ou de remplissage est comprise avantageusement entre 1 % et 50 % en poids par rapport au poids total de la composition, de préférence entre 15 et 50 %.

Il n'y a pas de limitation aux types d'agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléique, les ethylène-propylène-anhydride maléique, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

Les matériaux et compositions de l'invention sont généralement obtenus par mélange des différents constituants a chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. La résine novolaque et la polyoléfine peut être ajoutée à n'importe quel moment du processus de fabrication du matériau plastique, notamment par mélange a chaud ou a froid avec la matrice plastique.

L'addition des composés et des additifs, comme la résine novolaque, peut être réalisée par ajout de ces composés dans la matrice plastique fondue sous forme pure ou sous forme de mélange concentré dans une matrice telle que par exemple une matrice plastique.

Les granulés obtenus sont alors utilisés comme matière première pour alimenter les procédés de fabrication d'articles tels que les procédés d'injection, d'extrusion, d'extrusion-soufflage.

L'invention concerne également des articles obtenus par mise en forme de la composition de l'invention, par toute technique de transformation plastique, comme par exemple par extrusion, tel que par exemple extrusion de feuilles et films ou extrusion soufflage ; par moulage tel que par exemple moulage par compression, moulage par thermoformage ou par rotomoulage ; par injection tel que par exemple par moulage par injection ou par injection soufflage.

L'invention concerne tout particulièrement des articles du type de ceux contenant ou transportant un fluide, comprenant au moins une partie à base d'une composition telle que décrite précédemment. Ce sont donc généralement des corps creux ou des films et articles d'emballages. Ces articles sont notamment choisi dans le groupe comprenant : les réservoirs, les containers, les cuves, les bouteilles, les boites, les tubes, les tuyaux, les conduites, les éléments de pompes, ou dérivés.

La composition ou matériau selon la présente invention peut être déposé ou associé avec un autre substrat, tel que des matériaux plastiques pour la fabrication d'articles composites, notamment multicouches. Ce dépôt ou cette association peut se faire par les méthodes connues de co-extrusion, de lamination, d'enduction, de surmoulage, de co-injection, d'injection soufflage multicouche, ou de soudage. Des structures multicouches peuvent être formées d'une ou de plusieurs couches de matériau selon l'invention. Ces couches peuvent être associées notamment par des couches de liant de co-extrusion à une ou plusieurs autres couches d'un ou de plusieurs polymères thermoplastiques, par exemple les polyoléfines comme le polyéthylène et le polypropylène, le polychlorure de vinyle, le polyéthylène téréphtalate, le polybutylène téréphtalate le PA 12, PA 6.10, le PA 6.12, le polyfluorovinylidène (PVDF), le polyphénylène sulfide (PPS), le copolymère éthylène-alcool vinylique (EVOH), les copolymères PA 6/6.36, 6/6.9, 6/6.10.

On préfère notamment des articles multicouches comprenant au moins une couche obtenue à partir d'une composition polyamide selon l'invention comprenant au moins de la résine novolaque, et au moins une couche obtenue à partir d'une composition comprenant une polyoléfine. Préférentiellement, la polyoléfine est de même nature dans les deux couches. Plus préférentiellement encore, la polyoléfine est un polyéthylène.

Les films ou feuilles ainsi obtenus peuvent être mono-étirés ou bi-étirés selon les techniques connues de transformation des thermoplastiques. Les feuilles ou les plaques peuvent être découpées, thermoformées et/ou estampées afin de leur donner la forme voulue.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

## PARTIE EXPERIMENTALE

**Exemple 1 :** Fabrication des tubes plastiques

Les composés utilisés sont les suivants :

- PA 6 : TECHNYL S 40 (viscosité 4 mesurée en acide sulfurique) de la société RHODIA
- Polyéthylène de haute densité (HDPE) : Eraclene BB 76 de la société POLIMERI EUROPA
- Novolaque : Rhénosin PR 95 de la société RHEIN CHEMIE
- PA 12 : tuyaux commerciaux
- EVOH : Soarnol D2908 de la société NIPPON GOHSEI
- Polyéthylène de haute densité (HDPE) greffé anhydride maléique : Polybond 3009 de la société Chemtura.

Des tubes ayant une épaisseur de 1 mm (diamètre externe de 8 mm ; diamètre interne de 6 mm) sont mis en forme par extrusion sur un appareillage de marque Mac.Gi type TR 35/24 GM, en utilisant les différents composés comme mentionné dans le Tableau 1. Les tubes réalisés comprennent tous une seule couche, sauf le N°6 (C4) qui présente 3 couches (couche intérieure, centrale et extérieure).

Les caractéristiques de la mise en oeuvre sont les suivantes :

- température de l'extrudeuse : 230°C
- vitesse de vis : 8 rpm
- couple moteur : 4,7 Ampères
- pression en sortie d'extrusion : 2000 psi (pound square inch)
- vide : - 0,2 bar

Les tubes sont ensuite stockés 48h à 23°C et 50% RH (humidité relative).

<u>Exemple 2 :</u> Perméabilité à l'essence

La perméabilité des différents tubes à l'essence est évaluée par mesure de la perte de poids en fonction du temps. Les différents tubes de l'exemple 1 sont séchés dans une étuve sous vide à 70 °C pendant 12 heures. On remplit les différents tubes avec de l'essence et on bouche lesdits tubes. Les tubes ainsi remplis sont pesés sur une balance de précision. Les tubes sont ensuite placés dans une étuve à 40°C pendant 100 jours. A intervalles de temps réguliers les tubes sont pesés et la perte en masse notée. La perméabilité est donc mesurée en statique.

L'essence est constituée en volume de : 45 % de toluène, 45 % d'isooctane, et 10 % d'éthanol.

La courbe perte de poids en fonction du temps se décompose en deux phases : une première phase d'induction (correspondant à la diffusion du fluide à travers la paroi du tube), puis une deuxième phase de diminution du poids des tubes (correspondant au passage d'un ou des fluides à travers la paroi du tube). La perméabilité, mesurée en $g/m^2/jour$, est calculée à partir de la pente de la deuxième phase.

**Tableau 1**

| Tube | Composition | Temps d'apparition de la deuxième phase (jour) | Perméabilité $(g/m^2/jour)$ |
|---|---|---|---|
| 1 | PA6 + 20% HPDE + 10 % HDPE-g-MA + 5 % novolaque | 55 | 0,8 |
| 2 | PA6 + 20% HPDE + 10 % HDPE-g-MA + 10 % novolaque | 88 | 0,3 |
| C1 | PA6 + 20 % HDPE + 10 % HDPE-g-MA | 20 | 1,2 |
| C2 | PA12 | 0,2 | 18,8 |
| C3 | HDPE | 0,1 | 480 |
| C4 | HDPE/EVOH/HDPE | 4 | 0,5 |

On observe ainsi qu'un tube en polyamide selon l'invention comprenant de la résine novolaque présente une excellente imperméabilité à l'essence, bien supérieure à un tube en polyamide selon l'art antérieur ne comprenant pas de novolaque. De plus, l'imperméabilité à l'essence d'un tube polyamide selon l'invention comprenant de la résine novolaque est supérieure à celle des tubes tricouches (HDPE/EVOH/HDPE) classiquement utilisés dans le domaine et considérés comme la combinaison ayant une excellente imperméabilité à l'essence.

**Revendications**

1. Composition polyamide à propriétés barrières élevées aux fluides comprenant :

   a) une matrice polyamide,
   b) une résine novolaque,
   c) de 5 à 30 % en poids d'une polyoléfine ne comprenant pas de groupements fonctionnels destinés à améliorer sa compatibilité avec le polyamide, ladite polyoléfine c) étant un polyéthylène de haute densité; et
   d) un agent compatibilisant entre la polyoléfine et le polyamide, ledit agent de compatibilisation d) étant un polyéthylène greffé anhydride maléique;

   et **caractérisé en outre en ce qu'**elle comprend de 40 à 80 % en poids de polyamide, par rapport au poids total de la composition et de 2 à 20 % en poids de l'agent compatibilisant d), par rapport au poids total de la composition.

2. Composition selon la revendication 1, **caractérisée en ce qu'**elle comprend de 0,1 à 20 % en poids de résine novolaque b) par rapport au poids total de la composition.

3. Composition selon la revendication 1 ou 2, **caractérisée en ce qu'**elle comprend au moins 30 % en poids d'agent compatibilisant d), par rapport au poids de la polyoléfine c).

**4.** Article obtenu par mise en forme d'une composition selon l'une quelconque des revendications 1 à 3 par au moins une technique de transformation d'extrusion, de moulage, ou d'injection.

**5.** Article composite comprenant au moins un matériau fait à partir de la composition selon l'une quelconque des revendications 1 à 3.

**6.** Article composite selon la revendication 5, **caractérisé en ce que** ledit article est multicouche et dans lequel au moins une couche est constituée de la composition selon l'une quelconque des revendications 1 à 3.

**7.** Article composite multicouche selon la revendication 6, **caractérisé en ce qu'**au moins une couche est constituée de la composition selon l'une quelconque des revendications 1 à 3, et qu'au moins une couche est obtenue à partir d'une composition comprenant une polyoléfine.

**Patentansprüche**

**1.** Polyamidzusammensetzung mit hohen Flüssigkeitsbarriereeigenschaften, umfassend:

a) eine Polyamidmatrix,
b) ein Novolak-Harz,
c) 5 bis 30 Gew.-% eines Polyolefins, umfassend keine funktionellen Gruppierungen, die dazu bestimmt sind, seine Kompatibilität mit dem Polyamid zu verbessern, wobei das Polyolefin c) ein Polyethylen mit hoher Dichte ist; und
d) ein Buchungsmittel zwischen dem Polyolefin und dem Polyamid, wobei das Buchungsmittel d) ein Maleinsäureanhydrid-Pfropfpolyethylen ist;

und ferner **dadurch gekennzeichnet, dass** sie 40 bis 80 Gew.-% Polyamid bezogen auf das Gesamtgewicht der Zusammensetzung und 2 bis 20 Gew.-% des Buchungsmittels d) bezogen auf das Gesamtgewicht der Zusammensetzung umfasst.

**2.** Zusammensetzung nach Anspruch 1, **dadurch gekennzeichnet, dass** sie 0,1 bis 20 Gew.-% Novolak-Harz b) bezogen auf das Gesamtgewicht der Zusammensetzung umfasst.

**3.** Zusammensetzung nach Anspruch 1 oder 2, **dadurch gekennzeichnet, dass** sie mindestens 30 Gew.-% eines Buchungsmittels d) bezogen auf das Gewicht des Polyolefins c) umfasst.

**4.** Gegenstand, der durch Formung einer Zusammensetzung nach einem der Ansprüche 1 bis 3 durch mindestens eine Extrusions-, Formungs- oder Einspritz-Verarbeitungstechnik erhalten wird.

**5.** Verbundgegenstand, umfassend mindestens ein Material, das aus der Zusammensetzung nach einem der Ansprüche 1 bis 3 hergestellt ist.

**6.** Verbundgegenstand nach Anspruch 5, **dadurch gekennzeichnet, dass** der Gegenstand mehrschichtig ist, und bei dem mindestens eine Schicht von der Zusammensetzung nach einem der Ansprüche 1 bis 3 gebildet ist.

**7.** Mehrschichtiger Verbundgegenstand nach Anspruch 6, **dadurch gekennzeichnet, dass** mindestens eine Schicht von der Zusammensetzung nach einem der Ansprüche 1 bis 3 gebildet ist, und dass mindestens eine Schicht aus einer Zusammensetzung, umfassend ein Polyolefin, erhalten wird.

**Claims**

**1.** Polyamide composition having high fluid barrier properties comprising:

a) a polyamide matrix;
b) a novolac resin;
c) from 5 to 30% by weight of a polyolefin that does not comprise functional groups intended to improve its compatibility with the polyamide, said polyolefin c) being a high-densiy polyethylene; and

d) an agent for compatibilization between the polyolefin and the polyamide, said compatibilizing agent d) being a maleic antydride-grafted polyethylene;

and further **characterized in that** it comprises from 40 to 80% by weight of polyamide, relative to the total weight of the composition, and from 2 to 20% by weight of the compatibilizing agent d), relative to the total weight of the composition.

2. Composition according to Claim 1, **characterized in that** it comprises from 0.1 to 20% by weight of novolac resin b) relative to the total weight of the composition.

3. Composition according to Claim 1 or 2, **characterized in that** it comprises at least 30% by weight of compatibilizing agent d), relative to the weight of the polyolefin c).

4. Article obtained by forming a composition according to any one of Claims 1 to 3 by at least one extrusion, moulding or injection-moulding conversion technique.

5. Composite article comprising at least one material made from the composition according to any one of Claims 1 to 3.

6. Composite article according to Claim 5, **characterized in that** said article is a multilayer article in which at least one layer is composed of the composition according to any one of Claims 1 to 3.

7. Multilayer composite article according to Claim 6, **characterized in that** at least one layer is composed of the composition according to any one of Claims 1 to 13, and that at least one layer is obtained from a composition comprising a polyolefin.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5443867 A
- US 20050069662 A1
- FR 2743077
- FR 2779730
- US 5959069 A
- EP 0632703 A
- EP 0682057 A
- EP 0832149 A
- WO 9903909 A
- WO 0068298 A